(19)

Europäisches
Patentamt
European
Patent Office
Office européen
des brevets

(11) **EP 3 165 896 A1**

(12) **EUROPEAN PATENT APPLICATION**

(43) Date of publication:
**10.05.2017 Bulletin 2017/19**

(51) Int Cl.:
**_G01N 3/317_** _(2006.01)_

(21) Application number: **15193239.9**

(22) Date of filing: **05.11.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **ETH Zurich**
**8092 Zurich (CH)**

(72) Inventors:
• **Daraio, Chiara**
  **8006 Zürich (CH)**
• **Bonanomi, Luca**
  **8006 Zürich (CH)**
• **Beck, Clara**
  **8057 Zürich (CH)**
• **Eggenspieler, Damien**
  **1110 Morges (CH)**
• **Serra Garcia, Marc**
  **8006 Zürich (CH)**
• **Reuter, Tom**
  **8057 Zürich (CH)**

(54) **DEVICE AND METHOD FOR A NON-DESTRUCTIVE MEASUREMENT OF MECHANICAL PROPERTIES**

(57)   A device (100) for a non-destructive measurement of mechanical properties of a test body (21) comprises a striker (4) having a tip (3). The striker is positioned above the test body and is configured that the tip impacts the test body (21) with a predetermined velocity (v0) causing a displacement (d), wherein at least one sensor (5) determines one of the physical values from the group of force acting on and acceleration of the striker. The device further comprises a control unit connected with the striker and configured to obtain the sensor signals over time (30) of the impact and the predetermined impact velocity and calculates a force-displacement diagram (35) based on the sensor signal and the knowledge of the predetermined impact velocity through Newton's second law and integrating the force profile while taking into account the normal modes of vibration of the striker's tip.

Fig. 2

**EP 3 165 896 A1**

**Description**

TECHNICAL FIELD

The present invention relates to a device and a method for a non-destructive measurement of mechanical properties.

PRIOR ART

It is a need in research in materials science and in quality control processes to know the mechanical properties of materials.

A large variety of techniques exists to measure mechanical properties of materials. The techniques can be categorized into two fields; destructive and non-destructive tests. Destructive tests induce plastic (i.e. permanent) deformation of the sample. These deformations could be fractures, cracks, changes in mechanical properties etc. Nondestructive tests on the other hand do not damage the sample i.e. the structural integrity of the sample stays intact.

Destructive tests performed with tensile test-machines are procedures determining mechanical properties of materials such as Young's modulus, yield stress, compressive strength or deformation behaviour beyond yield point, as e.g. mentioned in Smith, Leslie R. Springer; "Handbook of materials measurement methods"; Eds. Horst Czichos, Tetsuya Saito, and Leslie Smith. Springer Science & Business Media, 2006.

The sample is clamped in the machine and undergoes a specified force profile. The tensile test on samples with specified geometry allows to perform standardized ASTM procedures to determine the stress-strain relationship of materials.

A different approach uses an indentation test that measures hardness (i.e. the resistance of the material to plastic deformation) as a quasi-static test. A tip is pressed onto a given piece of material with a known force. The force is applied for 10 to 15s before unloading. The plastically deformed indented area is then measured with a microscope either manually or by image processing. Measurements based on indentation assess the hardness of materials, (generally metals) by pressing a stiff tip with a specific force into the sample. After releasing the tip the imprinted area is measured with a microscope. The hardness of the material is then computed by dividing of the force by the area. The measured hardness value is directly related to the tip geometry and usually expressed with hardness scales as Brinell, Vickers, Knoop and Rockwell.

The instrumented indentation test is similar to the classical indentation test. The difference is that it measures the displacement or depth of indentation continuously during the indentation as described by Oliver, Warren C., and Georges M. Pharr. "Measurement of hardness and elastic modulus by instrumented indentation: Advances in understanding and refinements to methodology." in Journal of materials research 19.01 (2004): 3-20. This results in obtaining hardness values without measuring the plastically deformed indented area. The measurement is performed during the indentation and offers additional information such as indentation modulus or elasto-plastic modulus. During the indentation, the indentation force is measured by a force sensor and the indentation depth by a displacement sensor. The interpretation of the resulting force versus displacement curve leads to the mechanical properties.

Composite structures are very popular in automotive and aeronautical applications because of their advantageous ratio between mass and mechanical strength. Repeated cyclic stresses can induce a detachment between layers in the composite leading to delamination. Various techniques are used in industry to detect delamination in composite structures. Several methods are used in aeronautics to perform structural inspection of rudders as described in "Rudders structural inspections", retrieved at http://www.ndt.net/forum/files/19hickenpresentation.pdf; an AIRBUS publication of ATA NDT Forum in Orlando, FL, USA; 27-30 August 2007. The simplest way to detect delamination is to tap the entire surface point by point with a coin and evaluate the sound generated by the impact. If the delamination is sufficiently large the resulting sound will change. However this simple method is limited by a variety of factors. The test must be performed by a skilled inspector and cannot be automated. Testing large areas leads to lower precision of the inspector's judgment due to a decrease in concentration capacity. The large number of tests might also influence the memory of the reference sound.

A precise method to determine mechanical properties is to use the Mitsui Woodpecker as disclosed in US 5,048,320 by Mitsui Engineering & Shipbuilding Co., Ltd, "Method and apparatus for impact-type inspection of structures". The woodpecker impacts the composites with a small hammer equipped with a pressure sensor or accelerometer. The force is measured during the contact time and the obtained force profile allows to establish the contact time. The comparison to a reference allows the identification of differences in structural integrity.

A further approach to determine the mechanical properties is the application of ultrasonic techniques which are used in a broad field of application ranging from analysis of concrete structure, welds to medical applications as inter alia described by Garnier, Christian, et al. in "The detection of aeronautical defects in situ on composite structures using Non Destructive Testing." in Composite structures 93.5 (2011): 1328-1336 and by Adams, R. D., and P. D. R. D. Cawley.

In "A review of defect types and nondestructive testing techniques for composites and bonded joints" in NDT international 21.4 (1988): 208-222. The ultrasonic evaluation is based on the emission, propagation and reception of ultrasonic waves. Ultrasonic waves are generated by a transducer (emitter) and propagate in the sample. The transducer consists of a piezoelectrical crystal excited by an alternating current driving it to its resonance frequency and so transforming electrical energy into mechanical energy. The wave speed is dependent of the medium in which the waves travel and the waves get reflected on geometrical boundaries, cracks and material transitions. The reflected wave profile is measured either by the same transducer or by another transducer (receiver). The analysis of the wave response allows to detect and localize the defects or to determine the thickness of the sample. One of the disadvantages of ultrasonic testing is the requirement of a couplant between the transducer and the sample. The liquid ensures the proper wave transmission from the transducer into the material. The interpretation of results must in general be performed by a trained technician and manual post-processing work, obstructing the integration of ultrasonic techniques into production lines.

Other techniques also used to detect defects in composites are infrared thermography and speckle shearing interferometry as disclosed in the above mentioned Garnier publication.

A highly nonlinear wave pulse detection method was developed at the California Institute of Technology and the University of Pittsburgh as disclosed by Daraio, Chiara, and Piervincenzo Rizzo in US 8,327,709 with the title "Method and apparatus for nondestructive evaluation and monitoring of materials and structures." The method uses a granular chain of spherical particles, constrained by a compression force and highly nonlinear waves for nondestructive evaluation and structural health monitoring. An inspection pulse is introduced in the structure under inspection. Part of the pulse having travelled through the structure is then received by the nonlinear receiver, being the chain of spherical particles. The pulse response is measured using a piezoelectrical sensor in the nonlinear receiver. Structural changes lead to differences in the measured force profiles.

A further prior art device is the so-called rebound hammer or Schmidt hammer as described by Marco Brandestini in US 8 261 620 B2 having the title "Method and apparatus for the non-destructive measurement of the compressive strength of a solid". The rebound hammer is used to determine the quality of concrete on a construction site. The Silver-Schmidt Hammer is said to determine the compressive strength of concretes in a range of 5 MPa to 150 MPa. The Silver-Schmidt is an improved version of the original Schmidt Hammer. Both have a very similar technology. A spring-loaded mass (mallet) with a given energy impacts a plunger in contact with the concrete. During the impact, energy is lost due to plastic deformation, the rebound of the mass decreases. The maximum rebound height (R-value) is indicated by a drag pointer. The R-value correlates to the compressive strength of concrete. One of the main drawbacks of the original Schmidt Hammer is that the R-value is dependent of the inclination angle of the surface due to gravity.

The Silver-Schmidt Hammer uses the same mechanical principle and improves the technology by measuring the velocity of the mallet. The velocity is measured using an IR light source and a dual light detector. The impacting mallet is equipped with ribs leading to changes in the measured light intensity. The change in time interval of the light is correlated to the velocity. The velocity is measured before and after the impact. The Q-factor is the quotient of the rebound velocity and the inbound velocity, it provides information about the compressive strength of concrete.

David Hsu has disclosed in "Nondestructive Evaluation of Sandwich Structures: A review of some inspection techniques"; Journal of Sandwich Structures and Materials, Vol. 11, July 2009, p. 275-291 that the force-displacement curve can be obtained through the displacement-versus-time response of a tap via twofold integration of the acceleration-time curve to get the force profile. The data is then combined to result in the force-displacement curve.

SUMMARY OF THE INVENTION

The prior art solutions are bulky, slow, expensive and usually require a considerable amount of calibration and training. It is an aim of the present invention to address one or more of these issues.

The invention provides a solution for the above mentioned limitations of the prior art providing a fast, compact and cost effective device for the measurement of mechanical properties.

In other words; the invention is related to the reconstructions of the force versus displacement curve of a material to be tested by tapping the material's surface and measuring the initial velocity of the tapping device as well as one of the physical values from the group consisting of force and acceleration of the tapping device while striking the surface.

The material surface is subjected to a contact interaction with a striker. In one preferred embodiment, the force acting on the striker during the contact is measured by a force sensor and signal processing allows the reconstruction of the displacement profile of the striker. The force with the associated displacement provides an objective measurement for the characterization of structure and mechanical properties, inter alia Young's modulus, Loss modulus or viscoeleastic parameters.

The invention provides advantages in research and development through rapid feedback to analyze a larger number of samples. Furthermore, the feedback can be provided in real time during sample preparation. As in-line quality control, the device and method according to the invention can be integrated in production lines. Then, every piece of material produced can be tested allowing to detect defects early and reducing waste and unnecessary labor which would result from continuing to work on defective parts. Furthermore, the invention enables compact and fast tests of materials and existing structures as on-site maintenance and testing application. It can be applied on construction sites and in repair shops, inter alia for car repair, boat repair and tires. Such an in situ control ensures safety and detects potential failures before significant damage takes place.

Unlike the instrumented indentation test of the prior art as mentioned above, the present invention measures the force or another input of the model as acceleration during an impact and calculates the other value using an inverse kinematic model. The instrumented indentation test prescribes the force or the displacement during the testing and measures the other value, i.e. the displacement or the force, respectively.

The prior art device according to US 5,048,320 concentrates on the analysis of the force versus time profile. The velocity of the indenter is not measured at any time during the impact measurement and an inverse model of the striker is not used. This is why the "woodpecker" of the prior art cannot establish Force vs Displacement curves. The analysis of the Force-Time profile offers no possibilities to determine mechanical properties of materials and is limited to qualitative measurements of differences in structural properties.

A fundamental difference between the prior art document US 8,327,709 and the technology according to the invention lies in the simplification of the technique by not using a chain of spherical particles. The last spherical particle of the chain is also in contact with the material under investigation during the entire measurement procedure, whereas in our case the striker is in contact only for a short time. Furthermore introducing an inverse model allows us to determine the force vs displacement curve and the extraction of mechanical properties. For this method the nonlinear nature of the wave pulse used makes it very difficult to extract the material properties from the detected response.

It is important to note that the prior art device called Schmidt Hammer does not measure the force or the displacement during the impact. The measurement is limited to measuring the loss of kinetic energy during the impact. Another difference in technology is the use of a mallet and a plunger. In the case of the Schmidt Hammer, the plunger is in contact with the sample before, during and after the measurement. This procedure is an indirect impact on the sample but with the consequences of impact energy loaded on the sample. The present invention works with a direct impact of the striker on the sample and is not in contact with the sample before and after measurement. This allows the integration into production line.

The present invention is related to the structural and local properties of the surface of the material. Here, surface relates to the surface as such and the material layer of a depth until e.g. 20 millimetres, or at least 5 millimetres.

A device for a non-destructive measurement of mechanical properties of a test body comprises a striker having a tip, wherein the striker can be positioned above the test body and is configured that the tip impacts the test body with a predetermined velocity v0 causing a displacement d. One sensor is measuring a physical input parameter of the striker during the impact. In a preferred embodiment at least one force sensor is attached at the tip or between the tip and the main striker body. A control unit is connected with the striker and configured to obtain the force sensor signals over time of the impact and the predetermined or measured impact velocity v0. It is configured to calculate a force-displacement diagram based on the force sensor signal and the knowledge of the predetermined impact velocity v0 through an inverse kinematic model. The model considers the modes of the striking body, a measured variable like force or acceleration and calculates the unknown variables. The modes of the striking body can be determined using FEM or analytical calculations.

The combination of signal processing of values obtained by a force sensor known as such and the use of material models through knowledge of vibration modes of the tip into a mechanical device in addition to a high precision velocity measurement system for a knowledge of the velocity prior to the impact. This leads to new opportunities in the measurement of structural and mechanical properties. The velocity prior to impact is also mentioned as initial velocity. Of course, any starting velocity can be used, as long as the movement as e.g. the free fall prior to impact is known to calculate the velocity prior to the impact.

The device can use different mechanisms for measuring the striker velocity as an accelerometer, optical barrier, magnetic sensor, capacitive sensor. As an alternative it is possible that the device can use a calibrated velocity for the signal processing instead of measuring it at every strike.

The material and geometry of the striker can vary; in the embodiments they are shown as a solid cylinder for the striker body and various tips are used.

The device can use deformation (strain) sensors instead of force sensors. The device can comprise a plurality of force sensors and the control unit can use a sensor fusion algorithm (Kalman filter) to calculate the force and displacement at the contact point.

The system can use numerical integrals using a 4th order Runge-Kutta method in the control unit or the system of differential equations can be integrated using other numerical algorithms as RK2, Euler or implicit methods.

The signal processing can be implemented inside or outside of the device.

The signal processing can be implemented using different technologies as DSP, FPGA, Microcontroller, or a microprocessor.

The device can use a different mechanism to accelerate the striker as gravity, piezoelectric actuator, compressed fluid.

The device can use a different protocol to transmit the information from the signal processing unit to the computer/display. Possible alternative interfaces are 12C, SPI, Wi-Fi, and USB among others.

Further embodiments of the invention are laid down in the dependent claims.

The main advantages of the present invention comprise inter alia the high speed of the measurements (less than a tenth of a second), a user-friendly interface, where no technical training or specific knowledge is required to use the device or to effect the method, and the device can be used for a broad range of materials and geometries. It provides an easy adaptability and the technology can be implemented into arbitrary device geometries. A further important aspect is the ability to integrate the testing devices into production lines, wherein the testing is performed in real-time. Further applications comprise implementations in robots or used as a table-top or handheld device.

Depending on the customer's needs, the output of the device can be adapted. The force versus displacement curve, measured by the device, allows to extract different parameters directly related to the mechanical or structural properties of the tested sample. For example, a pass/fall criteria based on calibration of the device can be implemented. Data can be stored in the device and an average of several tests can be computed.

Implementing the technology in production lines to guarantee quality control requires automated testing and a computer interface to monitor the testing. A Bluetooth connection as a wireless connection between the device and the control computer can be realized, of course both objects can be connected with an electrical cable.

The technology can also be used as a hand-held device for onsite quality control. For quality control testing of concrete in superstructure work, the device can even be integrated into formworks. This allows customers to quickly address quality issues and detect early failures in the tested materials and constructions (composites, polymer, concrete etc). Last but not least the technology can be used to quickly evaluate the mechanical properties of an unknown material or, if necessary, compare it to another material, which is a powerful tool for research applications.

BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,

| | |
|---|---|
| Fig. 1A, 1B, 1C | show a schematical partial side view, a side view and a cross-section of mechanical components of a device according to the invention; |
| Fig. 2 | shows the time flow of the striker movement with a schematical representation of the striker and a surface, the force-time diagram as well as the resulting force-indentation diagram; |
| Fig. 3 | shows a perspective view of a handheld embodiment of the device; |
| Fig. 4 | shows a partial cross-section of the handheld embodiment according to Fig. 3; |
| Fig. 5 | shows a cross-section of an embodiment of the mechanical components of the device; |
| Fig. 6 | shows a flowchart of an embodiment of a measurement method executed within the control unit; |
| Fig. 7 | shows FD (force-displacement) output diagrams for different materials as PVC and PET; |
| Fig. 8 | shows FD output diagrams for concrete after different hardening time intervals; |
| Fig. 9 | shows FD output diagrams for different beams; |
| Fig. 10 | shows FD output diagrams for a beam with a damaged portion at said portion in comparison to an undamaged portion; |
| Fig. 11 | shows an array of measurement devices according to an embodiment of the invention; |
| Fig. 12 | shows FD output diagrams for a beam with different surface surface roughnesses at said different portions; |
| Fig. 13 | shows different method steps of an embodiment of the invention; |
| Fig. 14 | shows schematically different tip forms of the tip of the striker according to Fig. 1; |
| Fig. 15 | shows an embodiment of a measurement device of the invention; |
| Fig. 16A, 16B | show normal modes of a striking body and an embodiment with a mathematical representation of the modes; |
| Fig. 17A, 17B, 17C | show the measurement of various physical variables during the striking movement using various techniques; and |
| Fig. 18 | shows a velocity output diagram of the striking body during a measurement. |

DESCRIPTION OF PREFERRED EMBODIMENTS

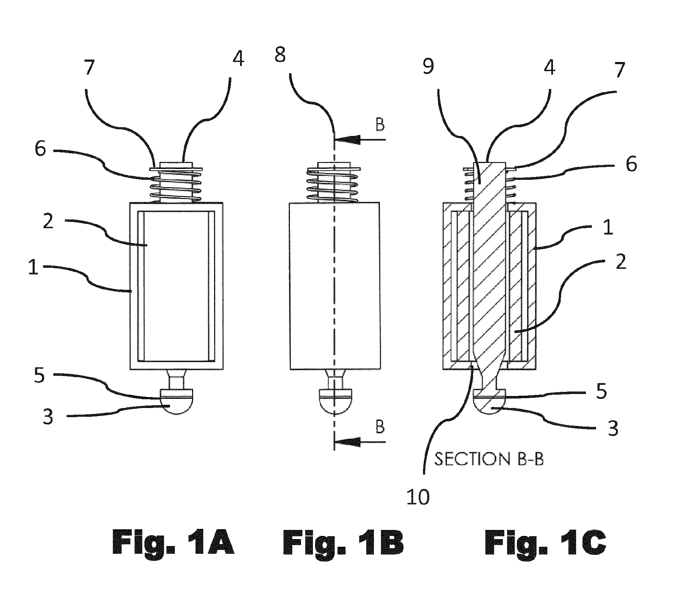

Fig. 1A shows a schematical partial side view inside the shell of the device, Fig. 1B a side view of the device and Fig. 1C a cross-section of mechanical components of a device according to the invention. The device comprises a case 1 having a longitudinal axis 8. A striker 4 is positioned along the longitudinal axis 8 and can be displaced freely along this axis, preferably between two abutments (not shown). Case 1 has two opposite holes or openings 10 along the axis 8 to allow striker 4 to extend beyond the case 1.

A solenoid 2 is provided within the case 1 and is connected to a power supply and a control unit. The solenoid is adapted to generate an electromagnetic force to accelerate the striker 4. Striker 4 comprises mainly a ferrometallic core 9. In the preferred embodiment the ferrometallic core is made of AISI 430F steel and has a 4mm diameter. The free end of the striker 4 comprises a rounded tip 3. Between the rounded tip 3 and the core 9 is provided a piezoelectric sensor 5 used to measure the contact force when the striker hits the surface of a material to be checked. The piezoelectric sensor 5 can be attached by glue or other adhesive means to the rounded tip 3 on one side and to the core 9 on the other side.

The rounded tip 3 allows the determination of the elastic properties of the measured item. Solenoid 2 creates an electromagnetic force in the striker 4 which then freely travels between a retracted form and an extended form. A spring 6 is provided between the upper case surface of the case and a ring 7. Spring 6 pulls back the striker 4 from the extended form to the retracted form. Therefore spring 6 is attached to the ring 7 and to the striker 4.

As said before the solenoid 2 is mounted inside the case 1, being in the embodiment of Fig. 1A to 1C a ferromagnetic housing. The ferromagnetic housing 1 allows a higher efficiency for the electromagnetic acceleration. The holes 10 on the top and bottom side align the striker 4 in the axial direction 8 of the case 1.

The piezoelectric sensor measures a force signal during the contact of the striker 4 with the item. Said force signal is transmitted via a cable (not shown) to the control unit. There, the signal is then digitized and sent to the processing unit of the control unit. An alternative method to measure the force during contact is by attaching one or multiple strain gauges to the striking body determining though the induced deformations and forces during the impact.

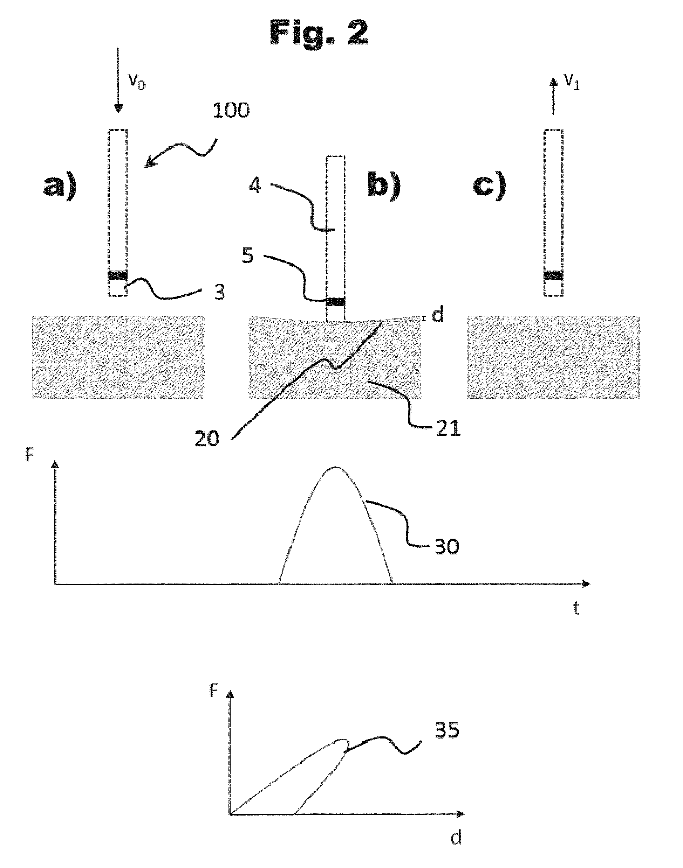

Fig. 2 the time flow of the striker movement with a schematical representation of the striker 4 and a surface 20 of a test body 21, a force-time diagram 30 as well as the resulting force-indentation diagram 35;

The force-time diagram 30 shows the force measured by sensor 5 over time. Three representations a), b) and c) show the time flow of a striker contact. In a) striker 4 is accelerated to velocity v0 above surface 20 of test body 21. The impact shown in b) results in an indentation d in the surface 20 of the test body 21. Striker 4, which is preferably not accelerated from v0 before impact, rebound than as shown in c) of Fig. 2 with a certain rebound velocity v1, being different and typically slower than v0.

The velocity v0 is necessary for the use of the inverse kinematic model. v0 can either be predetermined by means of calibration and using optical systems after manufacturing. An alternative is to integrate a velocity measurement system into the device, which measures the velocity of the striking body. The velocity measurement system can consist of a laser interferometer, accelerometer, optical systems, or another method determining the velocity. The value of the velocity is transferred to the control unit (not shown in Fig. 1 and Fig. 2) for further evaluation and especially to calculate the force indentation diagram 35 based on this velocity value as well as the force profile measured during the impact.

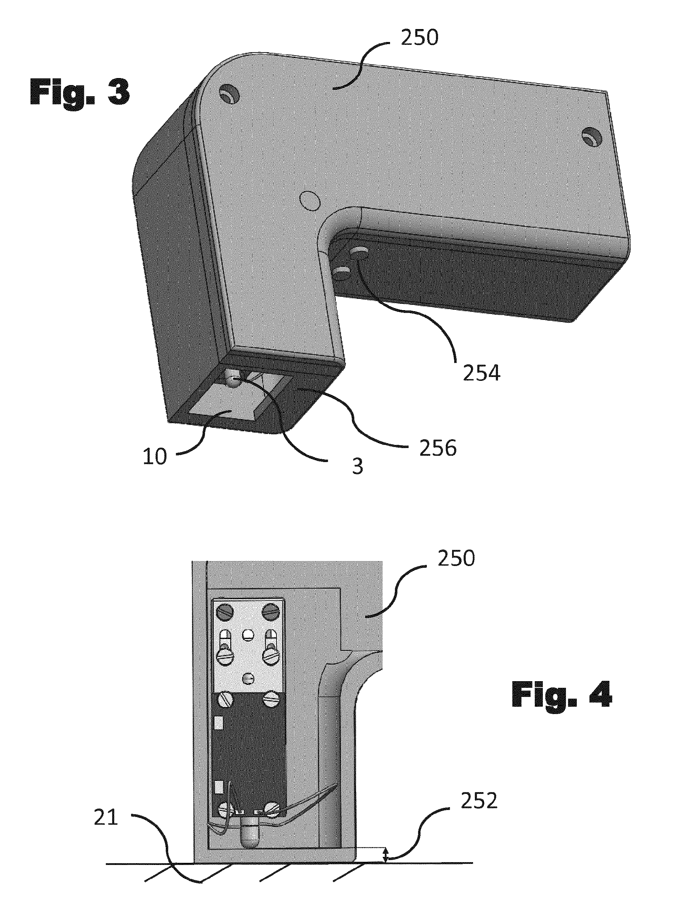

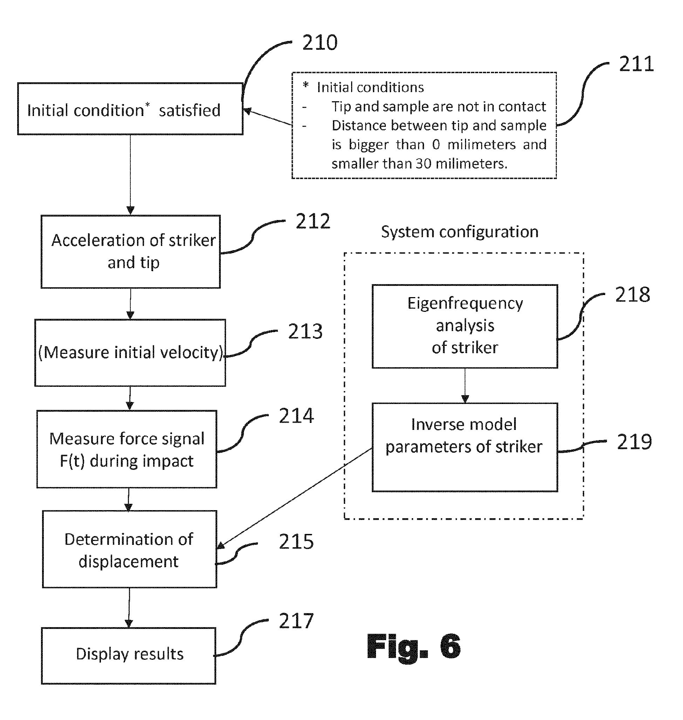

Fig. 3 shows the outer shell of the device 250. This is one possible shell design that protects the mechanical and electrical part of the device. 254 are buttons used in this design to trigger the measurement as explained in the description of Fig.6. Bottom surface of the shell is used as a contact surface 256 to ensure the right distance between the tip and the sample. Tip 3 of the striker can be seen in the bottom opening 10 in the contact surface 256.

Fig. 4 shows a cross sectional view of the inner part of the shell 250 on which mainly the mechanical part of the device can be seen. The device is put on top of the investigated sample. Double arrow with the reference numeral 252 represents the initial distance between the tip 3 and the top surface of the measured sample.

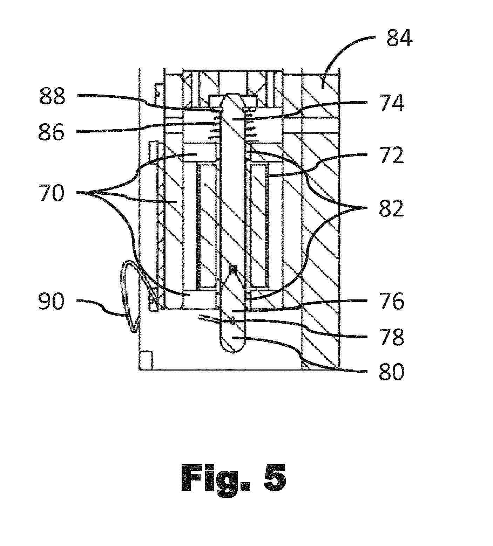

Fig. 5 shows a cross-section of a preferred embodiment of the device. The entire striking body is supported by a ferromagnetic case 70. The striker 4 comprises in this embodiment the ferromagnetic core 74, a nonmagnetic connector 76, a force sensor 78 and a tip 80. The axial alignment of the striker is ensured through bearings 82. The force sensor is connected through cables 88 to the control unit. This distance 252 is in the range of 2 to 30mm allowing the striker to be accelerated prior impact. Once the case 250 is placed on top of the sample, the measurement is initiated either manually using a button 254 or alternatively is initiated automatically by a number of force sensors integrated in the contact surface 256 registering that the casing is now in proper contact with the sample. A proper contact meaning that the striker is in a perpendicular angle to the sample's surface, an angle that is ensured when the case 250 is in flat contact with the sample.

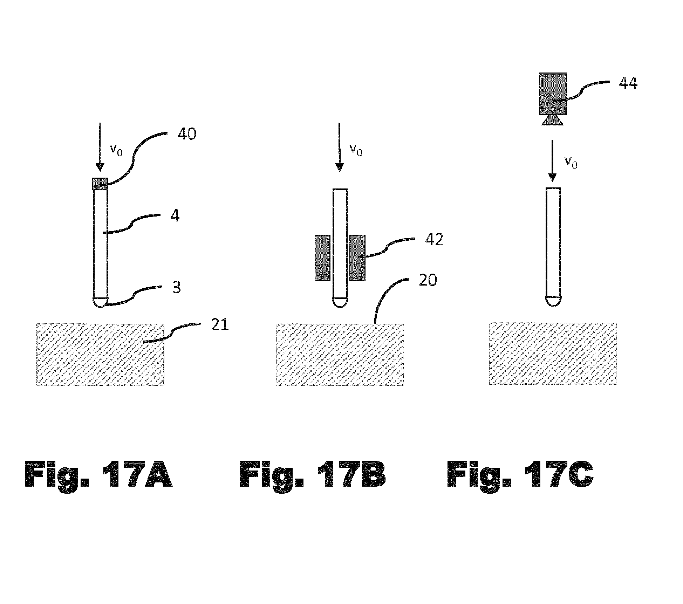

Fig. 6 is a representation of the complete measurement method executed within the control unit as displayed in a flowchart. The device 100 comprises the striker apparatus, a power supply and a control unit. In the embodiments shown here, the striker apparatus comprises the case 1 with the striker 4 as shown in Fig. 1A to 1C. The power supply is connected with the control unit and the striker apparatus. The control unit is an electronic unit, preferably a programmable unit as a computer with memory, input device and output appliances. As explained above, the distance between the tip and the sample must be greater than nil but smaller than 30 millimetres as indicated in 211. If this condition is satisfied, the striker can be accelerated using electromagnetic forces, a loaded spring, inertia, compressed air or other means for acceleration 212. The measurement of the initial velocity 213 is performed in case a system to measure the striker velocity is part of the instrument. The possible systems for the measurement of the velocity are described in Fig 17. In the case no measurement of the initial velocity is performed, the velocity is known through prior calibration of the device. The force response from the material is measured during the impact 214 and plotted in function of time.

The force signal is measured 214 through reception of signals from the piezoelectric sensor 5 being connected to the control unit.

Then the indentation d is calculated in the following way: The signal processing system analyzes the force signal obtained from the piezoelectric sensor 5 over time and calculates the force and displacement of the striker 4 at the point of contact by using a mathematical model of the striker 4. According to Sjoblom, Peter 0., J. Timothy Hartness, and Tobey M. Cordell. "On low-velocity impact testing of composite materials" in Journal of composite materials 22.1 (1988): 30-52, the displacement can be calculated by using Newton's second law and integrating the force profile. This existing method is extended by taking into account the normal modes of vibration of the striker 4. Therefore, the vibration modes of the striker 4 used in the tests are to be evaluated prior to the measurements. But once these parameters are known, the measurement can be effected in real time.

The model used has the advantage that it can generate force-displacement relations from the measurement of a single variable. This is accomplished through a striker model, which calculates the contact force, displacement or velocity from the measured data.

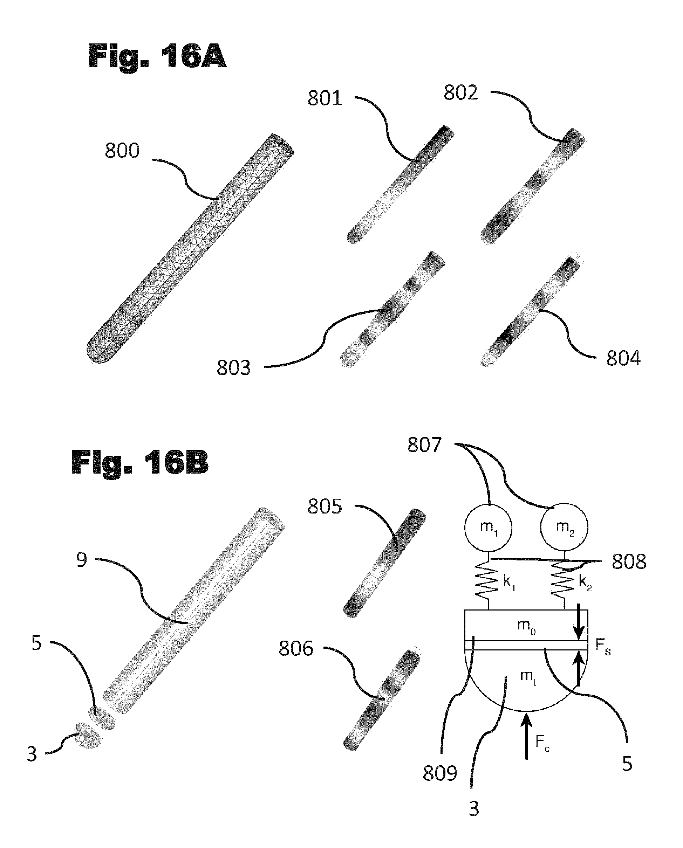

In the model, the instantaneous state of the striker is described using a vector x consisting of *M* variables $x = (x_1, x_2, ..., x_M)$. These variables may represent the displacements and velocities of the striker at a set of control nodes, or the displacements and velocities of a set of normal modes of vibration. It is no requirement that the state variables have a straightforward physical interpretation in terms of striker displacements or velocities. An example of this possible modes of vibration is shown in Fig. 16A. A way to determine the vibrational modes, is to conduct an eigenmode analysis of the striker 800 using a FEM software. Reference numerals 801, 802, 803, 804 are provided for the representation of the different eigenmodes of striker 800 and each eigenmode of the striker shows the vibrational behavior of the striker 800 for the corresponding eigenfrequency.

The model calculates the evolution of the striker's state by using a differential equation. This differential equation describes the evolution of the state vector in time as a function of the instantaneous state vector and the sensor input. The sensor input S may be a force, displacement, velocity or acceleration. The equation has the form:

$$\frac{d\boldsymbol{x}}{dt} = f(\boldsymbol{x}, S, t)$$

The desired variables (Contact force and contact displacement) are given by two functions of *x, S* and *t*. The solution of this equation requires the initial condition for the state x. This initial condition can be the initial velocity of the striker. Knowing the force and displacement at each instant of time allows us to determine the force-displacement relation:

$$F_c(t) = \mathcal{F}(\boldsymbol{x}, S, t)$$

$$X_c(t) = \mathcal{X}(\boldsymbol{x}, S, t)$$

The functions F, $F_c$ and $X_c$ can contain integrals or derivatives. The preferred embodiment uses the model shown in Fig. 16B with eigenmode representations with reference numerals 805 and 806. The model corresponds to a striker 4 consisting of a ferromagnetic core 9, a tip 3 and a piezoelectric sensor 5. The tip 3 is modeled in this embodiment as a rigid body with the mass $m_t$, while the ferromagnetic core is modeled as having two normal modes of vibration and a rigid body motion. The dynamics of such a system are equivalent to the set of masses and springs as shown in Fig. 16B. The masses $m_1$ and $m_2$ 807 are the effective masses of the two considered eigenmodes with the corresponding spring stiffness 808. The mass $m_0$ 809 is the remaining rigid body mass of the striker that is not part of the vibrational modes. In the preferred embodiment, since the tip is small, it is treated as a rigid body and only the vibrations of the striker are taken into account.

The equations of motion for the masses $m_0$, $m_1$ and $m_2$ in Fig. 2c are:

$$\dot{x}_1 = v_1$$

$$\dot{x}_2 = v_2$$

$$\dot{v}_0 = (k_1/m_0)(x_1 - x_0) + (k_2/m_0)(x_2 - x_0) + F_S/m_0$$

$$\dot{v}_1 = (k_1/m_1)(x_0 - x_1)$$

$$\dot{v}_2 = (k_2/m_2)(x_0 - x_2)$$

This is the expression for $f(x, S, t)$ for this model with the state vector is defined as $x = (x_0, x_1, x_2, v_1, v_2; v_3)$ and the sensor output $S = F_S$. Since the bottom of the striker and the tip are assumed to move as a rigid body, the expression for the contact displacement is $X_C(x, S, t) = x_0$.

The contact force comes from the fact that $F_C - F_S = m_t \dot{v}_0$. This gives the expression:

$$\mathcal{F}_C(x, S, t) = F_s - m_t[(k_1/m_0)(x_1 - x_0) + (k_2/m_0)(x_2 - x_0) + F_S/m_0]$$

This model can then be integrated using any known numerical integration algorithm. In the preferred embodiment a 4th order Runge-Kutta method is used.

Different models (with alternate functions $f$, $F_C$ and $X_C$) can be obtained by including more modes of vibration, assuming whole-striker models, or decomposing the striker in discrete elements.

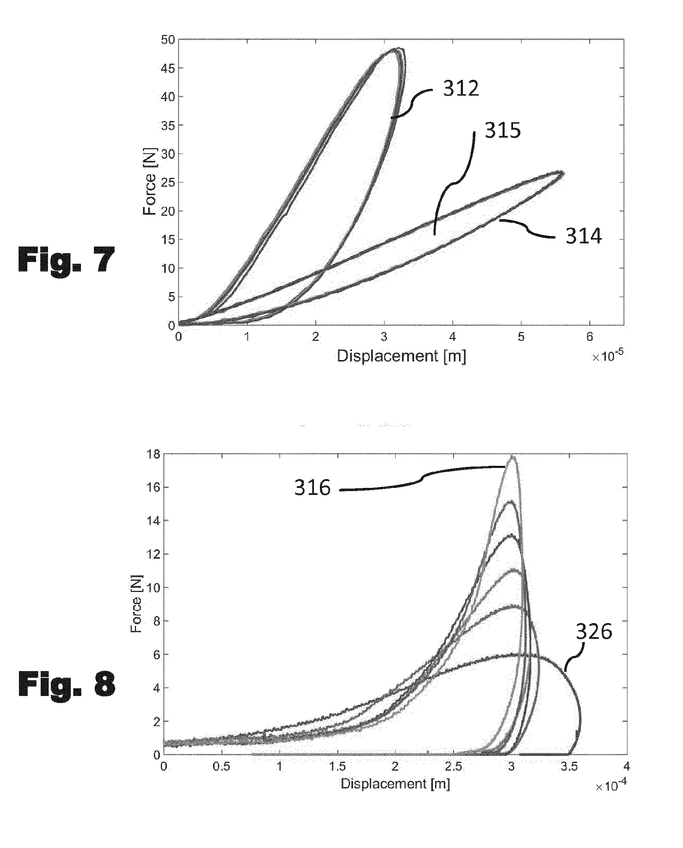

Fig. 7 shows a sequence of FD output diagrams for different materials as PVC (curves 312) and PET (curves 314), whereas the area contained is the loss modulus representing area 315. In the embodiment shown, the displacement is shown in micrometres and the force is measured in Newton.

Fig. 8 shows further FD output diagrams for concrete after different hardening time intervals between 140 and 240 minutes. The reference numeral 326 is used for the curve of the shortest hardening time 140 minutes and the reference numeral 316 is used for the curve of the longest hardening time 240 minutes. The other curves are for hardening time with 220, 200, 180 and 160 minutes. The displacement on the x-axis is shown between 0 and $4 \times 10^{-4}$ meter.

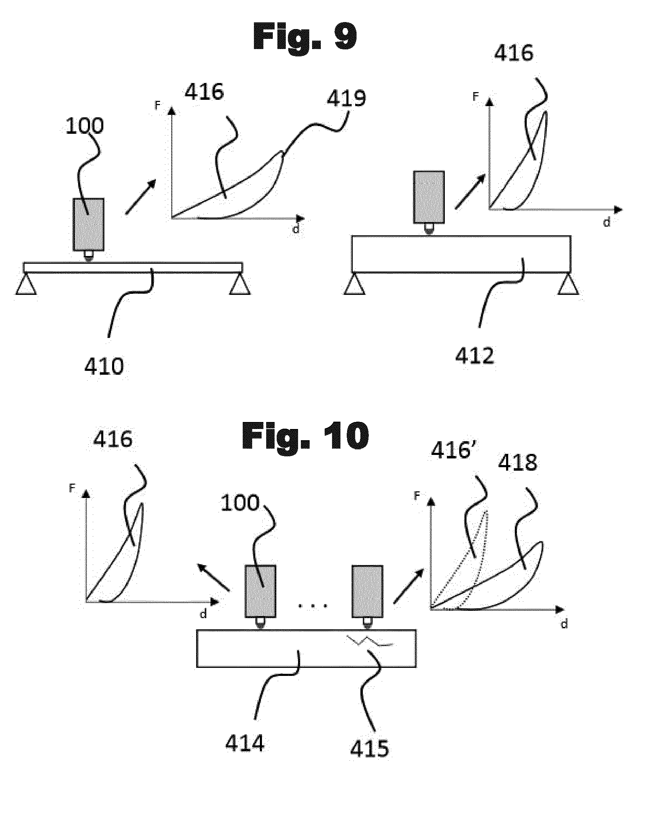

Fig. 9 shows FD output diagrams 416 for different sized beams. Beam 410 is a thin doubly mounted beam and beam 412 is a thick doubly mounted beam as test body 21. The curve for the thin beam has a higher displacement for a lower force than the corresponding curve for the thick beam resulting in a different form and tip 419 of the curve.

Fig. 10 shows further FD output diagrams for a beam 414 with a damaged portion 415 at said portion in comparison to an undamaged portion. When the device 100 is moved from the left part to the right part, i.e. from the undamaged portion to the damaged portion 415 then the curve 416 calculated on the fly in real time changes from this curve 416' towards curve 418, indicating the damaged portion.

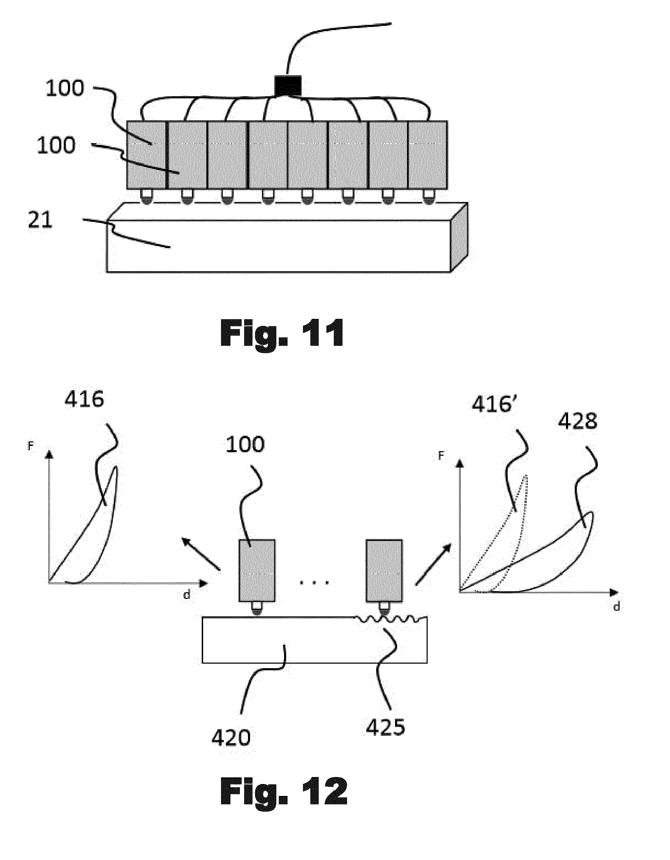

Fig. 11 shows an array of measurement devices 100 according to an embodiment of the invention above a test body 21. By aligning multiple devices 100 into an array, which can be a one dimensional line or a two dimensional array, large areas can be tested simultaneously. Since the sensor signals are generated at the point area of the separated contact surface 20, where the striker 100 hit, there is no risk of crosstalk and this approach combined with the speed of measurements will allow manufacturers to integrate a mechanical quality control into the production line and though reduce waste and production time, since the FD curves are obtained independently from each other and therefore different curves 416, 418, 428 can be obtained to determine defects and other changes in the test body or its surface. The strikers 100 hit the surface 20 at the same time or at different points in time. The answer is obtained for each striker 100 separately since their movement in the housings or cases 1 are not coupled one with the other and the measurements through sensors 5 is therefore fully independent one from the other.

Fig. 12 shows further FD output diagrams for a beam 420 with different surface portions at said different portions; portion 425 is a rough surface portion of the doubly mounted beam. Here, the same principle applies as with a damage in the beam like a crack in the beam, if the surface has a different texture, which can be rough. Of course, the result can also be obtained the other way round, i.e. the normal surface is a roughened surface and the existence of smoother parts is a problem to be detected. In any case there is a chance from a curve 416 for one portion of the beam to a curve 425 with a different surface.

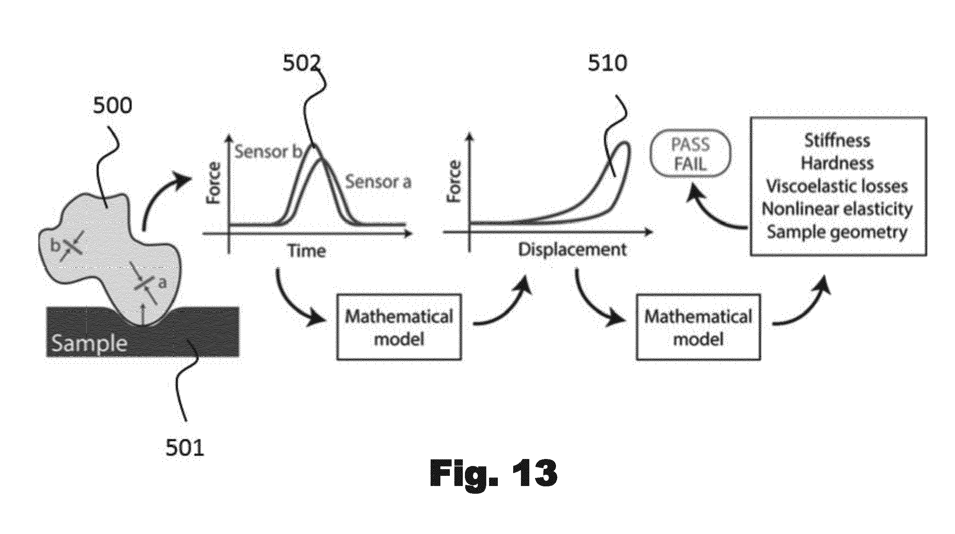

Fig. 13 shows the different method steps of an embodiment of the invention. The sample 501 is hit by striker 500. Striker 500 has a different form than a cylinder but comprises a tip. The tip comprises two sensors a and b sensing the force exerted by the contact of striker 500 with the sample 501 in different directions as shown by the arrows near a and b. The force-time signals 502 are provided for these two directions and are input into a mathematical model to derive the unique force displacement (FD) curve 510. Said curve as result of the method can be used as further input into a further mathematical model to obtain information about stiffness, hardness, viscoelastic losses, nonlinear elasticity and sample geometry, which can then be used for a pass and fail decision.

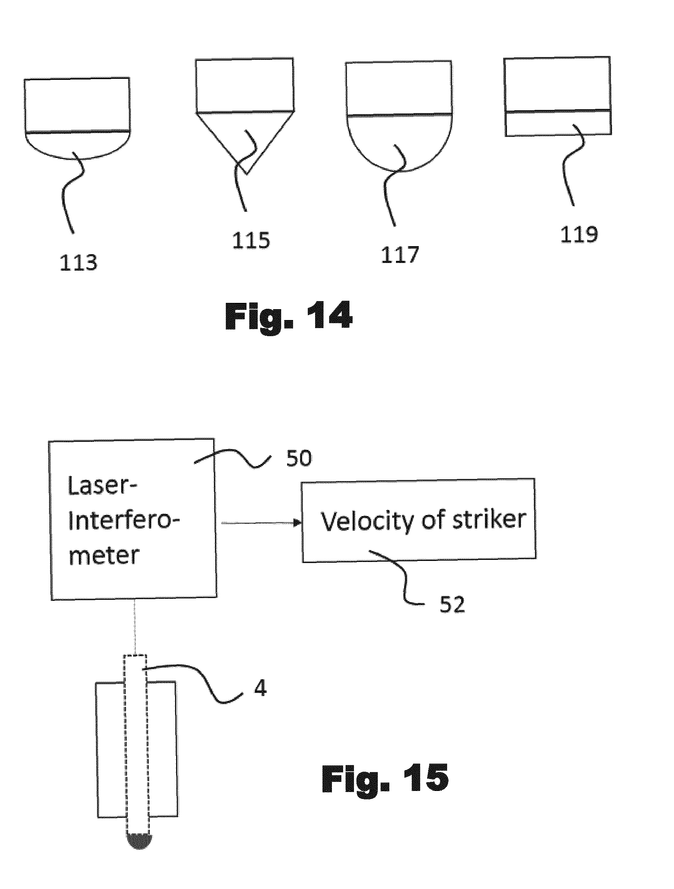

Fig. 14 shows schematically different tip forms of the tip 3 of the striker 4 according to Fig. 1. The tip with elliptic cross-section has the reference numeral 113, the tip with a conical or a pyramidal cross-section (both are possible with this side view) has the reference numeral 115, the tip with a spherical cross-section is 117 and the tip with a square cross-section is tip 119. Between the tips 113, 115, 117, 119 and the body of the striker 4 is provided the piezoelectric sensor 5, which is glued to both parts. A striking body integrating other means to measure the force or displacement like for example strain gauges can also be equipped with different tip forms.

Fig. 15 shows an embodiment of the system containing a laser interferometer 50 that measures the velocity 52 of the striker 4 between the retracted and the extended form. The velocity can be used in the signal processing algorithm to calculate high precision material properties.

The data transmission and result interpretation can be achieved as follows: The force-displacement relations generated by the signal processing algorithm are then transmitted to a host computer through serial port (RS232). The device integrates a commercial RS232 to Bluetooth card that allows wireless operation. A computer program displays the force-displacement curve and allows for additional signal processing. The Young's modulus obtained by fitting the force-displacement relation is displayed on a screen in the device. This value or other parameters extracted from the force-displacement curve can be used to implement pass-fail criteria for quality control.

The force-displacement curve can be used for material characterization as shown in Fig.7 or for monitoring curing processes of concrete Fig. 8. Fig. 9 shows how structural properties of the item influences the measured force-displacement curve. This enables the detection of delamination in fiber-reinforced polymers. Another application of the invention according to Fig. 10 is the detection of defects, leading to different force-displacement curves measured.

Fig. 17A to Fig. 17C show different options allowing the acceleration measurement. Fig 17A displays an accelerometer 40 that is placed on top of the striker which measures the acceleration the striker 4 is subjected to. Fig 17B measures the displacement through a change in electromagnetic forces with a coil that surrounds the striker 4. Fig 17C shows the optical methods (i.e. camera, laser, human eye) allowing to measure the displacement of the material during the impact. Thus, these representations show the use of the physical parameter displacement and as derived velocity and acceleration. The use of the force as the physical parameter was shown above in connection with another embodiment.

In one of the preferred embodiments the force is measured and used as input into the inverse kinematic model to calculate the displacement. An alternative is to measure the acceleration and using the same inverse kinematic model to calculate the force profile during the impact. This can inter alia be done by an accelerometer attached to the striking body measuring the acceleration during the measurement.

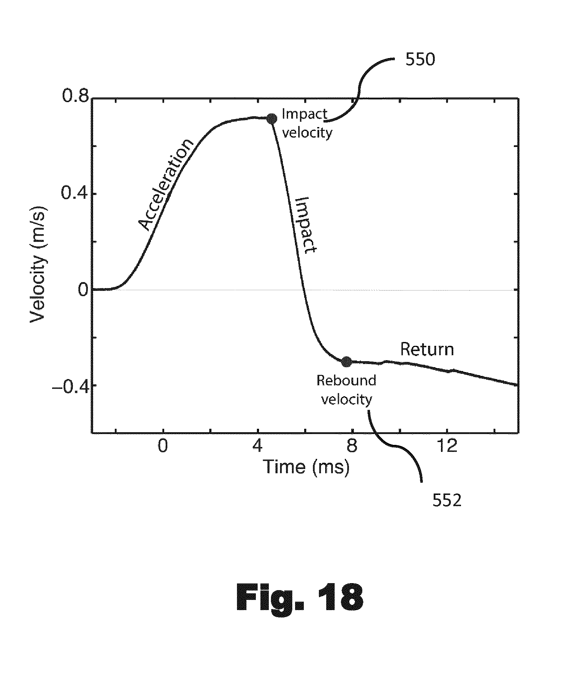

Fig. 18 shows a velocity profile for an entire measurement obtained using a laser interferometer 50. The striker 4 is first accelerated using electromagnetic forces, a loaded spring, gravity or other means. Prior impact with the surface 20 of the test body 21 the striker reaches its initial velocity v0 or impact velocity 550. The velocity just after the impact is the rebound velocity 552.

LIST OF REFERENCE SIGNS

| 1 | case | 113 | tip with elliptic cross-section |
|---|---|---|---|
| 2 | solenoid | 115 | tip with conical / pyramidal cross-section |
| 3 | rounded tip | | |
| 4 | striker | 117 | tip with circular cross-section |
| 5 | piezoelectric sensor | 119 | tip with rectangular cross-section |
| 6 | spring | | |
| 7 | ring | 210 | initialization of measurement verification |
| 8 | axis | | |
| 9 | core of the striker | 211 | initial conditions |
| 10 | hole | 212 | acceleration of striking body |
| 20 | surface | 213 | initial velocity measurement |
| 21 | test body | 214 | force measurement |
| 30 | force-time curve | 215 | displacement determination |
| 35 | force-displacement curve | 217 | display of results |
| 40 | accelerometer | 218 | eigenfrequency analysis |
| 42 | coil | 219 | inverse model configuration |

(continued)

| | | | |
|---|---|---|---|
| 44 | optical tracking system | 250 | shell |
| 50 | laser interferometer | 252 | initial distance |
| 52 | determination of v0 | 254 | button |
| 70 | case | 256 | contact surface |
| 72 | solenoid | 312 | PVC FD curve |
| 74 | core of the striker | 314 | PET FD curve |
| 76 | lower striker connector | 315 | loss modulus representing area |
| 78 | piezoelectric sensor | | |
| 80 | rounded tip | 316 | Concrete 240 min FD curve |
| 82 | linear bearings | 326 | Concrete 140 min FD curve |
| 84 | shell | 410 | thin beam |
| 86 | spring | 412 | thick beam |
| 88 | ring | 414 | beam with damage |
| 90 | cables | 415 | damaged portion |
| 100 | measurement device | 416 | FD curve output |
| 416' | previous FD output | 510 | FD curve |
| 418 | FD curve output at damage | 550 | impact velocity" |
| 419 | tip of the curve | 552 | rebound velocity |
| 420 | beam with smooth and rough surface | 800 | striker |
| | | 801-806 | eigenmodes |
| 425 | portion of rough surface | 807 | masses |
| 428 | FD curve of rough surface | 808 | spring stiffness 808 |
| 500 | striker | 809 | remaining mass |
| 501 | sample | | |
| 502 | force time curve of sensor | | |

## Claims

1.  Device (100) for a non-destructive measurement of mechanical properties of a test body (21) comprising a striker (4) having a tip (3), wherein the striker (4) can be positioned above a surface (20, 256) of a the test body (21) and is configured that the tip (3) impacts a contact point area of the surface (20, 256) of the test body (21) with a predetermined velocity (v0) causing a displacement (d) of the surface (20, 256) at the contact point area, wherein at least one sensor (5) is provided configured to determine one of the physical values from the group consisting of force acting on and/or acceleration of the striker (4) while striking the test body (21), wherein the device further comprises a control unit connected with the striker (4) and configured to obtain the sensor signals of the at least one sensor (5) over time of the impact and the predetermined impact velocity (v0), wherein the control unit is configured to calculate a force-displacement diagram based on the sensor signals and the knowledge of the predetermined impact velocity (v0) through Newton's second law and integrating the force profile while taking into account the normal modes of vibration of the striker (4) and/or of the tip (3) of the striker (4).

2.  Device according to claim 1, wherein the at least one sensor is a force or strain sensor (5) attached at the tip (3) or between the tip (3) and the main striker body.

3.  Device according to claim 2, wherein the force or strain sensor(s) (5) is/are either a piezoelectric force sensor provided between the tip (3) and the body of the striker (4) or comprises one or more strain sensors positioned at the tip (3) of the striker (4).

4.  Device according to any one of claims 1 to 3, wherein the sensors (5) comprise a plurality of sensors and wherein the control unit uses a sensor fusion algorithm, optionally a Kalman filter, to calculate the force and displacement at the contact point area.

5.  Device according to any one of claims 1 to 4, comprising an apparatus from the list comprising an interferometer, an accelerometer, an optical barrier, a magnetic sensor or a capacitive sensor to measure or calculate the predetermined velocity (v0).

6. Device according to any one of claims 1 to 4, wherein the predetermined velocity (v0) is a calibrated velocity instead of measuring it at every strike.

7. Device according to any one of claims 1 to 6, wherein the control unit uses numerical integrals of the force profile through a 4th order Runge-Kutta method or the system of differential equations is integrated using numerical algorithms, especially RK2, Euler or implicit methods.

8. Device according to any one of claims 1 to 7, wherein the predetermined velocity (v0) is reached through gravity, piezoelectric actuator or acceleration by a compressed fluid.

9. Method for a non-destructive measurement of mechanical properties comprising a device according to any one of claims 1 to 8, comprising the steps of:

- positioning the striker (4) with its tip (3) above the test body (21),
- providing that the tip (3) of the striker (4) impacts a contact point area of the surface (20, 256) of the test body (21) with a predetermined velocity (v0) causing a displacement (d) of the surface (20, 256) of the test body (21) upon impact,
- determining the impact velocity (v0),
- determining sensor signals of the sensor(s) (5) configured to determine one of the physical values from the group consisting of force acting on and/or acceleration of the striker (4) while striking the test body (21) over time,
- transmitting the impact velocity (v0) and the sensor signals over time of the impact to the control unit,
- calculating, within the control unit, a force-displacement diagram based on the sensor signals and the knowledge of the predetermined impact velocity (v0) through Newton's second law and integrating the force profile while taking into account the normal modes of vibration of the striker and/or of the tip of the striker (4).

10. Method according to claim 9, wherein the control unit comprises computer instructions for using a sensor fusion algorithm, optionally a Kalman filter, to calculate the force and displacement at the contact point area, based on the sensor signals from a plurality of sensors.

11. Method according to claim 9 or 10, wherein the control unit comprises a storage unit to store the predetermined velocity (v0) as calibrated velocity instead of measuring it at every strike.

**Fig. 1A**   **Fig. 1B**   **Fig. 1C**

# Fig. 2

**Fig. 3**

250

254

256

10

3

**Fig. 4**

250

21

252

**Fig. 5**

210

211

Initial condition* satisfied

* Initial conditions
- Tip and sample are not in contact
- Distance between tip and sample is bigger than 0 milimeters and smaller than 30 milimeters.

212

Acceleration of striker and tip

System configuration

213

(Measure initial velocity)

Eigenfrequency analysis of striker

218

214

Measure force signal F(t) during impact

Inverse model parameters of striker

219

Determination of displacement

215

217

Display results

**Fig. 6**

**Fig. 7**

**Fig. 8**

# Fig. 9

# Fig. 10

EP 3 165 896 A1

Fig. 11

Fig. 12

19

Fig. 13

113    115    117    119

## Fig. 14

Laser-Interfero-meter    50

→    Velocity of striker    52

4

## Fig. 15

# Fig. 16A

# Fig. 16B

**Fig. 17A**  **Fig. 17B**  **Fig. 17C**

Fig. 18

Europäisches
Patentamt

European
Patent Office

Office européen
des brevets

# EUROPEAN SEARCH REPORT

Application Number

EP 15 19 3239

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/179917 A1 (PRINGLE MATTHEW M [US]) 17 August 2006 (2006-08-17) <br> * figures 1,3 * <br> * paragraph [0001] - paragraph [0002] * <br> * paragraph [0013] * <br> * paragraph [0021] - paragraph [0022] * <br> * paragraph [0024] * <br> * paragraph [0035] - paragraph [0036] * <br> * paragraph [0044] * <br> * paragraph [0046] - paragraph [0047] * <br> * paragraph [0049] - paragraph [0056] * <br> ----- | 1-11 | INV. G01N3/317 |
| A | BURGER G J ET AL: "PIEZOELECTRIC IMPACT FORCE SENSOR ARRAY FOR TRIBOLOGICAL RESEARCH ON RIGID DISK STORAGE MEDIA", PROCEEDINGS OF THE WORKSHOP ON MICRO ELECTRICAL MECHANICAL SYSTEMS. (MEMS). AMSTERDAM, JAN. 29 - FEB. 2, 1995; [PROCEEDINGS OF THE WORKSHOP ON MICRO ELECTRICAL MECHANICAL SYSTEMS. (MEMS)], NEW YORK, IEEE, US, vol. WORKSHOP 8, 29 January 1995 (1995-01-29), pages 294-299, XP000555285, ISBN: 978-0-7803-2504-3 <br> * abstract * <br> * Introduction; paragraph [0001] * <br> ----- <br> -/-- | 1-11 | |

TECHNICAL FIELDS SEARCHED (IPC)

G01N

The present search report has been drawn up for all claims

| Place of search | Date of completion of the search | Examiner |
|---|---|---|
| The Hague | 26 April 2016 | Lefortier, Stéphanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EUROPEAN SEARCH REPORT

Application Number

EP 15 19 3239

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | D. K. HSU: "Nondestructive Evaluation of Sandwich Structures: A Review of Some Inspection Techniques", JOURNAL OF SANDWICH STRUCTURES AND MATERIALS, vol. 11, no. 4, 31 July 2009 (2009-07-31), pages 275-291, XP055268612, ISSN: 1099-6362, DOI: 10.1177/1099636209105377 * page 282 - page 284 * ----- | 1-11 | |
| A | K.R. RAMAKRISHNAN ET AL: "A comparative study of the impact properties of sandwich materials with different cores", EPJ WEB OF CONFERENCES, vol. 26, 31 August 2012 (2012-08-31), page 01031, XP055268621, DOI: 10.1051/epjconf/20122601031 * paragraphs [0003], [04.2] * ----- | 1-11 | |
| A | GB 2 379 276 A (PROCOM TECHNICAL SERVICES LTD [GB]) 5 March 2003 (2003-03-05) * page 9, line 15 - page 11, line 24 * * page 15, line 22 - page 16, line 3 * ----- | 1-11 | **TECHNICAL FIELDS SEARCHED (IPC)** |

The present search report has been drawn up for all claims

| Place of search | Date of completion of the search | Examiner |
|---|---|---|
| The Hague | 26 April 2016 | Lefortier, Stéphanie |

**EP 3 165 896 A1**

## ANNEX TO THE EUROPEAN SEARCH REPORT
## ON EUROPEAN PATENT APPLICATION NO.

EP 15 19 3239

26-04-2016

| Patent document cited in search report | Publication date | Patent family member(s) | Publication date |
|---|---|---|---|
| US 2006179917 A1 | 17-08-2006 | NONE | |
| GB 2379276 A | 05-03-2003 | NONE | |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5048320 A
- US 8327709 B, Daraio, Chiara, and Piervincenzo Rizzo
- US 8261620 B2, Marco Brandestini

### Non-patent literature cited in the description

- **SMITH ; LESLIE R. SPRINGER.** Handbook of materials measurement methods. Springer Science & Business Media, 2006
- **OLIVER, WARREN C. ; GEORGES M. PHARR.** Measurement of hardness and elastic modulus by instrumented indentation: Advances in understanding and refinements to methodology. *Journal of materials research,* 2004, vol. 19 (01), 3-20
- *Rudders structural inspections,* 27 August 2007, http://www.ndt.net/forum/files/19hickenpresentation.pdf
- **GARNIER, CHRISTIAN et al.** The detection of aeronautical defects in situ on composite structures using Non Destructive Testing. *Composite structures,* 2011, vol. 93 (5), 1328-1336
- **ADAMS, R. D. ; P. D. R. D. CAWLEY.** A review of defect types and nondestructive testing techniques for composites and bonded joints. *NDT international,* 1988, vol. 21 (4), 208-222
- Nondestructive Evaluation of Sandwich Structures: A review of some inspection techniques. *Journal of Sandwich Structures and Materials,* July 2009, vol. 11, 275-291
- **SJOBLOM, PETER 0. ; J. TIMOTHY HARTNESS ; TOBEY M. CORDELL.** On low-velocity impact testing of composite materials. *Journal of composite materials,* 1988, vol. 22 (1), 30-52